# FASCICULE DE BREVET EUROPEEN

(11) **EP 1 949 832 B1**
(45) Date de publication et mention de la délivrance du brevet: **07.04.2010**
(21) Numéro de dépôt: 08356003.7
(22) Date de dépôt: 09.01.2008
(51) Int. Cl.: A47J 43/07

(54) **Outil rotatif amovible avec organe de préhension amélioré**
Abnehmbares Drehwerkzeug mit verbessertem Greiforgan
Removable rotary tool with improved gripping element

(30) Priorité: 26.01.2007 FR 0700550
(43) Date de publication de la demande: 30.07.2008
(73) Titulaire: SEB S.A., 69130 Ecully (FR)
(72) Inventeur: Guillemin, Christophe, 65100 Lourdes (FR); Piedfer, Maud, 94170 Le Perreux sur Marne (FR); Durris, Cyril, 65690 Montignac (FR)
(74) Mandataire: Kiehl, Hubert

(56) Documents cités:
- DE-A1- 3 144 438
- FR-A1- 2 707 187
- US-A- 4 842 416
- US-B1- 6 289 793

## Description

La présente invention concerne le domaine technique des appareils électroménagers de préparation culinaire comportant un outil rotatif amovible présentant un organe d'entraînement inférieur.

La présente invention se rapporte plus particulièrement à l'outil rotatif amovible.

Il est connu du document US 3 493 022 un appareil pour émincer la viande, le poisson, les oeufs durs, le fromage, les légumes ou les herbes d'assaisonnement. Cet appareil comporte un outil rotatif amovible à entraînement inférieur. L'outil rotatif amovible présente une protubérance supérieure axiale destinée à faciliter la manipulation de l'outil. Toutefois ladite protubérance axiale est tronconique. De ce fait, la préhension par la protubérance axiale est peu satisfaisante, notamment lorsque la préparation réalisée dans l'appareil a rendu cette protubérance glissante.

Il est connu du document DE 31 44 438 un robot ménager comportant un outil rotatif amovible à entraînement inférieur. La partie supérieure de l'outil rotatif amovible comporte un disque supérieur surmontant une paroi aplatie. La face inférieure du disque supérieur permet de soulever l'outil rotatif amovible, par exemple en glissant deux doigts de part et d'autre de la paroi aplatie. Toutefois une telle préhension présente l'inconvénient de favoriser un basculement de l'outil rotatif, notamment lors d'un appui du pouce sur la face supérieure du disque supérieur.

Il est connu du document US 4 842 416 un outil rotatif d'agitation et de pétrissage pour robot ménager. Cet outil rotatif amovible à entraînement inférieur comporte un moyeu présentant une arche métallique supérieure formant un organe de préhension. L'espace présent sous ladite arche invite plutôt à soulever cet outil rotatif en utilisant un doigt replié comme crochet. Une telle préhension favorise un pivotement ou un balancement de l'outil rotatif.

Les solutions proposées dans les documents précitées présentent l'inconvénient d'offrir une préhension peu aisée ou d'être peu adaptées à des outils rotatifs amovibles de petite taille.

Un outil rotatif amovible selon le préambule de la revendication 1 est connu du document US6289793.

Un but de la présente invention est d'améliorer l'ergonomie de préhension d'un outil rotatif amovible d'appareil électroménager de préparation culinaire.

Un autre but de la présente invention est de faciliter la mise en place d'un outil rotatif amovible dans un appareil électroménager de préparation culinaire.

Un autre but de la présente invention est de faciliter le retrait d'un outil rotatif amovible disposé dans un appareil électroménager de préparation culinaire.

Les buts assignés à l'invention sont atteints avec un outil rotatif amovible pour appareil électroménager de préparation culinaire, comportant un moyeu présentant une face inférieure ménageant un organe d'entraînement, une partie supérieure du moyeu formant un organe de préhension muni de deux faces latérales opposées, l'une au moins des faces latérales présentant un organe de retenue supérieur, ledit moyeu présentant une direction axiale correspondant à l'axe de rotation de l'organe d'entraînement, l'épaisseur transversale de l'organe de retenue supérieur étant inférieure au quart de la hauteur axiale des faces latérales de l'organe de préhension, du fait que les faces latérales de l'organe de préhension s'étendent axialement en dessous de la mi-hauteur du moyeu et que l'épaisseur transversale de l'organe de préhension est inférieure au quart de la hauteur axiale des faces latérales de l'organe de préhension. L'épaisseur limitée de l'organe de préhension supérieur facilite la préhension par pincement entre le pouce et un des autres doigts. Les faces latérales s'étendant au moins jusqu'à la mi-hauteur du moyeu permettent de rapprocher la zone de préhension du centre de gravité de l'outil rotatif et ainsi d'orienter plus facilement l'outil rotatif amovible. Le retrait et la mise en place de l'outil rotatif amovible selon l'invention sont facilités.

Avantageusement, les deux faces latérales présentent chacune un des organes de retenue supérieurs, l'épaisseur des organes de retenue supérieurs étant inférieure au quart de la hauteur des faces latérales. Cette disposition permet de mieux retenir l'outil rotatif amovible lors de la préhension.

Avantageusement encore, l'une au moins des faces latérales présente des organes de retenue latéraux, l'épaisseur des organes de retenue latéraux étant inférieure au quart de la hauteur des faces latérales. Cette disposition permet également de mieux retenir l'outil rotatif amovible.

Selon une forme de réalisation préférée, l'organe de préhension présente une forme de disque. Cette géométrie est proche de celle de l'extrémité des doigts utilisés pour la préhension.

Avantageusement, l'une au moins des faces latérales présente un marquage. Cette disposition est particulièrement intéressante pour un appareil électroménager de préparation culinaire comportant plusieurs outils rotatifs amovibles destinés à des préparations différentes.

Avantageusement alors, le marquage est en relief. Cette disposition permet d'améliorer la préhension.

Selon une forme de réalisation préférée, l'outil rotatif amovible comporte au moins un organe de travail. En alternative, le moyeu de l'outil rotatif amovible peut être prévu pour recevoir un organe de travail amovible.

Avantageusement alors, ledit organe de travail est monté dans une partie inférieure du moyeu. En alternative, ledit organe de travail pourrait occuper au moins partiellement la partie supérieure du moyeu.

Avantageusement alors, ledit outil rotatif amovible est monobloc.

Avantageusement alors, le moyeu est surmoulé sur ledit organe de travail. Cette disposition permet d'obtenir une réalisation particulièrement économique, qui de plus favorise le nettoyage de l'outil rotatif amovible.

Selon une forme de réalisation préférée ledit organe de travail forme une lame. Cette lame peut être coupante ou non.

L'invention sera mieux comprise à l'étude d'un mode de réalisation, pris à titre nullement limitatif, illustré dans les figures annexées, dans lesquelles :
- la figure 1 est une vue en perspective partiellement éclatée d'un appareil électroménager de préparation culinaire comportant deux outils rotatifs amovibles selon l'invention,
- la figure 2 est une vue de côté en coupe partielle de l'appareil représenté à la figure 1,
- la figure 3 est une vue en perspective de l'un des outils rotatifs amovibles selon l'invention visibles sur la figure 1,
- la figure 4 est une vue en perspective et en coupe partielle de l'outil rotatif amovible montré à la figure 3,
- la figure 5 est une vue en perspective de l'autre outil rotatif amovible selon l'invention, également visible sur la figure 1.

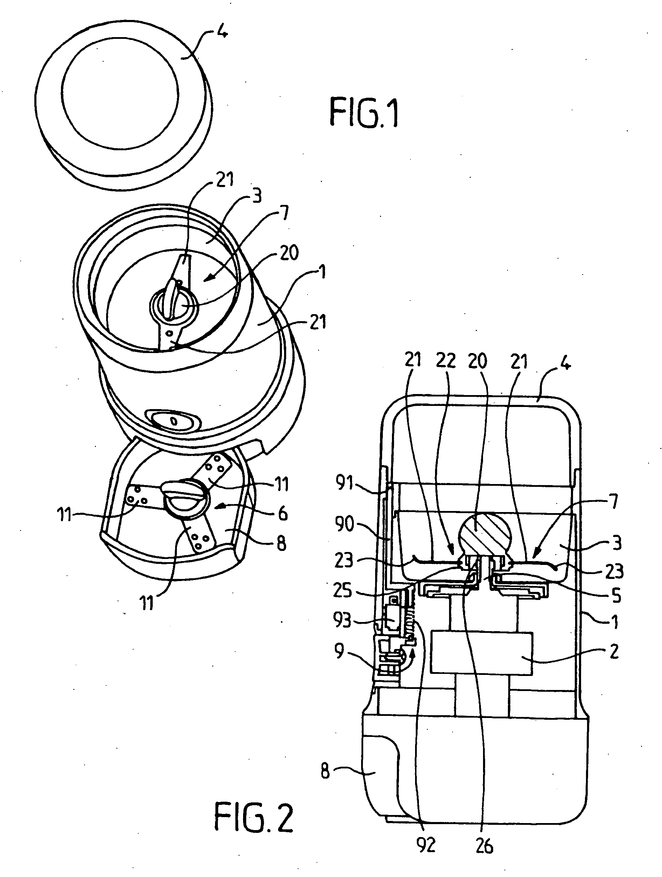

L'appareil électroménager de préparation culinaire illustré aux figures 1 et 2 est un moulin électrique comportant un boîtier 1 logeant un moteur électrique 2 et une cuve 3. Un couvercle 4 ferme la cuve 3. Le moteur électrique 2 est relié à un axe d'entraînement 5 prévu pour recevoir un outil rotatif amovible 6, 7. Le boîtier 1 comporte un logement recevant un tiroir 8 prévu pour ranger l'un des outils rotatifs amovibles 6, 7 alors que l'autre outil rotatif amovible est disposé dans la cuve 3 sur l'axe d'entraînement 5. Les outils rotatifs amovibles 6, 7 sont avantageusement monobloc.

Le boîtier 1 comporte un dispositif de sécurité 9 prévu pour commander le fonctionnement de l'appareil lorsque le couvercle 4 est en place sur la cuve 3. Le dispositif de sécurité 9 comporte une tige 90 comprenant un organe d'actionnement 91 prévu pour coopérer avec le couvercle 4. La tige 90 est montée mobile contre un ressort 92. La tige 90 repoussée par le couvercle 4 actionne un interrupteur 93 commandant le fonctionnement du moteur 2.

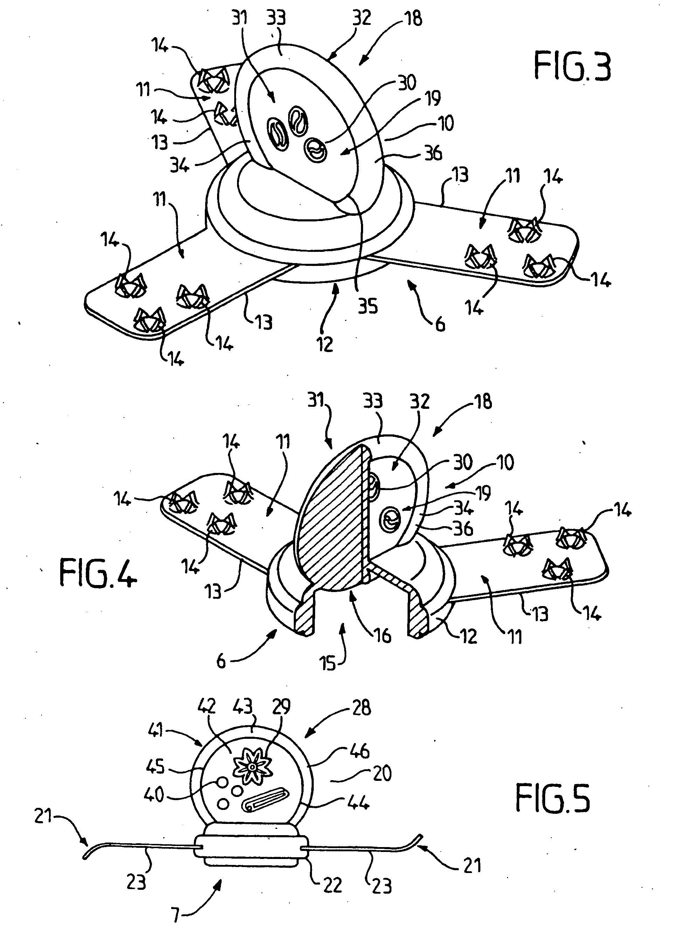

L'outil rotatif amovible 6 visible sur les figures 1, 3 et 4 comporte un moyeu 10 et trois organes de travail 11. L'outil rotatif amovible 6 est plus particulièrement prévu pour moudre le café. Tel que mieux visible sur les figures 3 et 4, les organes de travail 11 sont montés dans une partie inférieure 12 du moyeu 10. Chacun des organes de travail 11 forme une lame 13. Les lames 13 portent des poinçonnages 14 proéminents. Les poinçonnages 14 permettent d'éclater les grains de café.

L'outil rotatif amovible 7 visible sur les figures 1 et 5 comporte un moyeu 20 et deux organes de travail 21. L'outil rotatif amovible 7 est plus particulièrement prévu pour moudre les épices. Les organes de travail 21 sont montés dans une partie inférieure 22 du moyeu 20. Chacun des organes de travail 21 forme une lame 23. Tel que visible sur la figure 2, l'extrémité de l'une des lames 23 est recourbée vers le haut, l'extrémité de l'autre lame 23 étant recourbée vers le bas.

Chacun des moyeux 10 ; 20 présente une face inférieure 15 ; 25 ménageant un organe d'entraînement 16 ; 26 prévu pour coopérer avec l'axe d'entraînement 5. Chacun des organes de travail 11 ; 21 est monté dans la partie inférieure 12 ; 22 de l'un des moyeux 10 ; 20. Les moyeux 10 ; 20 sont avantageusement surmoulés sur les organes de travail 11 ; 21. Les moyeux 10 ; 20 présentent une direction axiale correspondant à l'axe de rotation de l'organe d'entraînement 16 ; 26.

Une partie supérieure 18 ; 28 de chaque moyeu 10 ; 20 forme un organe de préhension 19 ; 29. Chacun des organes de préhension 19 ; 29 est muni de deux faces latérales 31, 32 ; 41, 42 opposées. Les organes de préhension 19 ; 29 présentent une épaisseur réduite par rapport à la partie inférieure 12 ; 22 du moyeu 10 ; 20. Les faces latérales 31, 32 ; 41, 42 s'étendent au moins jusqu'à la mi-hauteur du moyeu 10 ; 20. L'une au moins des faces latérales 31, 32 ; 41, 42 présente un marquage 30 ; 40. Le marquage 30 ; 40 est avantageusement en relief. Plus particulièrement, les organes de préhension 19 ; 29 présentent une forme de disque surmontant la partie inférieure 12 ; 22 du moyeu 10 ; 20.

Chacune des faces latérales 31, 32 ; 41, 42 présente un organe de retenue supérieur 33 ; 43. L'épaisseur de l'organe de retenue supérieur 33 ; 43 est inférieure au quart de la hauteur des faces latérales 31, 32 ; 41, 42. L'épaisseur de l'organe de retenue supérieur 33; 43 est définie selon la direction perpendiculaire à la face latérale 31, 32; 41, 42 correspondante. La hauteur des faces latérales 31, 32 ; 41, 42 est définie selon la direction axiale du moyeu 10 ; 20. Les faces latérales 31, 32 ; 41, 42 forment des surfaces de préhension.

Chacune des faces latérales 31, 32 ; 41, 42 présente des organes de retenue latéraux 34, 35 ; 44, 45. L'épaisseur des organes de retenue latéraux 34, 35 ; 44, 45 est inférieure au quart de la hauteur des faces latérales 31, 32 ; 41, 42. L'épaisseur des organes de retenue latéraux 34, 35 ; 44, 45 est définie selon la direction perpendiculaire à la face latérale 31, 32 ; 41, 42 correspondante.

L'organe de retenue supérieur 33 ; 43 et les organes de retenue latéraux 34, 35 ; 44, 45 de chaque face latérale 31, 32 ; 41, 42 sont formés par un rebord périphérique 36 ; 46. En d'autres termes, le rebord périphérique forme un bourrelet. Tel que visible aux figures 3, 4 et 5, le rebord périphérique 36 ; 46 s'étend partiellement autour des faces latérales 31, 32 ; 41, 42.

La présente invention s'utilise de la manière suivante.

L'utilisateur peut saisir l'outil de travail rotatif 6 ; 7 en pinçant l'organe de préhension 19 ; 29 entre le pouce et un autre doigt, par exemple entre le pouce et l'index.

La position de la zone d'appui définie par l'organe de préhension 19 ; 29 est proche du centre de gravité de l'outil de travail rotatif 6 ; 7, tout en restant au-dessus dudit centre de gravité. L'organe de retenue supérieur 33 ; 43 permet de conserver une prise sur l'outil de travail rotatif 6 ; 7. Les organes de retenue latéraux 34, 35 ; 44, 45 permettent de faciliter la préhension.

La disposition des surfaces de préhension de l'organe de préhension 19 ; 29 permet d'orienter aisément l'outil de travail rotatif 6 ; 7 avant de mettre en place ledit outil de travail 6 ; 7 sur l'axe d'entraînement 5. La disposition des surfaces de préhension de l'organe de préhension 19 ; 29 permet également d'exercer un effort de rotation ou de vissage pour solidariser l'outil de travail 6 ; 7 et l'axe d'entraînement 5 si une liaison par vissage ou par baïonnette est utilisée entre l'outil de travail 6 ; 7 et l'axe d'entraînement 5. La disposition des surfaces de préhension permet aussi d'obtenir une orientation préférentielle en relâchant légèrement la pression exercée sur l'organe de préhension 19 ; 29.

Par rapport aux outils de travail de l'art antérieur, l'organe de préhension 19 selon l'invention permet un positionnement plus précis de l'outil de travail 6 ; 7 et aussi une préhension plus aisée nécessitant un effort moindre.

A titre de variante, l'outil rotatif amovible 6 ; 7 peut comporter au moins un organe de travail 11 ; 21.

A titre de variante l'une au moins des faces latérales 31, 32 ; 41, 42 de l'organe de préhension 19 ; 29 présente un organe de retenue supérieur 33 ; 43.

A titre de variante l'une au moins des faces latérales 31, 32 ; 41, 42 de l'organe de préhension 19 ; 29 présente un organe de retenue latéral 34, 35 ; 44, 45.

A titre de variante, l'organe de travail 11 ; 21 pourrait occuper au moins partiellement la partie supérieure du moyeu 10 ; 20.

A titre de variante, l'outil rotatif amovible 6 ; 7 peut être prévu pour recevoir un organe de travail amovible.

La présente invention n'est nullement limitée aux modes de réalisation décrits et à leurs variantes, mais englobe de nombreuses modifications dans le cadre des revendications.

## Revendications

1. Outil rotatif amovible (6 ; 7) pour appareil électroménager de préparation culinaire, comportant un moyeu (10 ; 20) présentant une face inférieure (15; 25) ménageant un organe d'entraînement (16 ; 26), une partie supérieure (18 ; 28) du moyeu (10 ; 20) formant un organe de préhension (19 ; 29) muni de deux faces latérales (31, 32 ; 41, 42) opposées, l'une au moins des faces latérales (31, 32 ; 41, 42) présentant un organe de retenue supérieur (33 ; 43), ledit moyeu (10; 20) présentant une direction axiale correspondant à l'axe de rotation de l'organe d'entraînement (16 ; 26), l'épaisseur transversale de l'organe de retenue supérieur (33 ; 43) étant inférieure au quart de la hauteur axiale des faces latérales (31, 32 ; 41, 42) de l'organe de préhension (19 ; 29), **caractérisé en ce que** les faces latérales (31, 32 ; 41, 42) de l'organe de préhension (19 ; 29) s'étendent axialement en dessous de la mi-hauteur du moyeu (10 ; 20) et **en ce que** l'épaisseur transversale de l'organe de préhension (19 ; 29) est inférieure au quart de la hauteur axiale des faces latérales (31, 32 ; 41, 42) de l'organe de préhension (19 ; 29).

2. Outil rotatif amovible (6 ; 7) selon la revendication 1, **caractérisé en ce que** les deux faces latérales (31, 32; 41, 42) présentent chacune un des organes de retenue supérieurs (33 ; 43), l'épaisseur transversale des organes de retenue supérieurs (33 ; 43) étant inférieure au quart de la hauteur axiale des faces latérales (31, 32 ; 41, 42).

3. Outil rotatif amovible (6 ; 7) selon l'une des revendications 1 ou 2, **caractérisé en ce que** l'une au moins des faces latérales (31, 32 ; 41, 42) présente des organes de retenue latéraux (34, 35 ; 44, 45), l'épaisseur transversale des organes de retenue latéraux (34, 35 ; 44, 45) étant inférieure au quart de la hauteur axiale des faces latérales (31, 32 ; 41, 42).

4. Outil rotatif amovible (6 ; 7) selon l'une des revendications 1 à 3, **caractérisé en ce que** l'organe de préhension (19 ; 29) présente une forme de disque.

5. Outil rotatif amovible (6 ; 7) selon l'une des revendications 1 à 4, **caractérisée en ce que** l'une au moins des faces latérales (31, 32 ; 41, 42) présente un marquage (30 ; 40).

6. Outil rotatif amovible (6 ; 7) selon la revendication 5, **caractérisé en ce que** le marquage (30 ; 40) est en relief.

7. Outil rotatif amovible (6 ; 7) selon l'une des revendications 1 à 6, **caractérisée en ce qu'**il comporte au moins un organe de travail (11 ; 21).

8. Outil rotatif amovible (6 ; 7) selon la revendication 7, **caractérisé en ce que** ledit organe de travail (11 ; 21) est monté dans une partie inférieure (12 ; 22) du moyeu (10 ; 20).

9. Outil rotatif amovible (6 ; 7) selon l'une des revendications 7 ou 8, **caractérisé en ce que** le moyeu (10 ; 20) est surmoulé sur ledit organe de travail (11 ; 21).

10. Outil rotatif amovible (6 ; 7) selon l'une des revendications 7 à 9, **caractérisé en ce que** ledit organe de travail (11 ; 21) forme une lame (13 ; 23).

11. Appareil électroménager de préparation culinaire comportant un boîtier (1) logeant un moteur électrique (2) et une cuve (3), le moteur électrique (2) étant relié à un axe d'entraînement (5) prévu pour recevoir un outil rotatif amovible (6, 7), **caractérisé en ce que** l'outil rotatif amovible (6, 7) est conforme à l'une des revendications 1 à 10.

12. Appareil électroménager de préparation culinaire selon la revendication 11, **caractérisé en ce qu'**il comporte deux outils rotatifs amovibles (6, 7) et **en ce que** le boîtier (1) comporte un logement recevant un tiroir (8) prévu pour ranger l'un des outils rotatifs amovibles (6, 7).

## Claims

1. Removable rotating tool (6; 7) for an electric household food preparation appliance, comprising a hub (10; 20) having a lower surface (15; 25) accommodating a drive component (16; 26), an upper part (18, 28) of the hub (10; 20) forming a handling component (19; 29) equipped with two facing lateral surfaces (31, 32; 41, 42), at least one of the lateral surfaces (31, 32; 41, 42) having an upper gripping component (33; 43), said hub (10; 20) having an axial direction that corresponds to the axis of rotation of the drive component (16; 26), the transverse thickness of the upper gripping component (33; 43) being less than one quarter of the axial height of the lateral surfaces (31, 32; 41, 42) of the handling component (19; 29), **characterised in that** the lateral surfaces (31, 32; 41, 42) of the handling component (19; 29) extend axially below the mid-height of the hub (10; 20) and **in that** the transverse thickness of the handling component (19; 29) is less than one quarter of the axial height of the lateral surfaces (31, 32; 41, 42) of the handling component (19; 29).

2. Removable rotating tool (6; 7) according to claim 1, **characterised in that** the two lateral surfaces (31, 32; 41, 42) each have one of the upper gripping components (33; 43), the transverse thickness of the upper gripping components (33; 43) being less than one quarter of the axial height of the lateral surfaces (31, 32; 41, 42).

3. Removable rotating tool (6; 7) according to one of claims 1 or 2, **characterised in that** at least one of the lateral surfaces (31, 32; 41, 42) has lateral gripping components (34, 35; 44, 45), the transverse thickness of the lateral gripping components (34, 35; 44, 45) being less than one quarter of the axial height of the lateral surfaces (31, 32; 41, 42).

4. Removable rotating tool (6; 7) according to one of claims 1 to 3, **characterised in that** the handling component (19; 29) is disc-shaped.

5. Removable rotating tool (6; 7) according to one of claims 1 to 4, **characterised in that** at least one of the lateral surfaces (31, 32; 41, 42) has a marking (30; 40).

6. Removable rotating tool (6; 7) according to claim 5, **characterised in that** the marking (30; 40) is protruding.

7. Removable rotating tool (6; 7) according to one of claims 1 to 6, **characterised in that** it comprises at least one working component (11; 21).

8. Removable rotating tool (6; 7) according to claim 7, **characterised in that** said working component (11; 21) is mounted on a lower part (12; 22) of the hub (10; 20).

9. Removable rotating tool (6; 7) according to one of claims 7 or 8, **characterised in that** the hub (10; 20) is overmoulded onto said working component (11; 21).

10. Removable rotating tool (6; 7) according to one of claims 7 to 9, **characterised in that** said working component (11; 21) forms a blade (13; 23).

11. Electric household food preparation appliance comprising a housing (1) containing an electric motor (2) and a bowl (3), the electric motor (2) being connected to a drive shaft (5) capable of receiving a removable rotating tool (6, 7), **characterised in that** the removable rotating tool (6, 7) complies with one of claims 1 to 10.

12. Electric household food preparation appliance according to claim 11, **characterised in that** it comprises two removable rotating tools (6, 7) and **in that** the housing (1) comprises a recess holding a drawer (8) capable of storing one of the removable rotating tools (6, 7).

## Patentansprüche

1. Abnehmbares Drehwerkzeug (6; 7) für ein Elektrohaushaltsgerät für kulinarische Zubereitungen, umfassend eine Nabe (10; 20), die eine Unterseite (15; 25) aufweist, in der ein Antriebselement (16; 26) untergebracht ist, wobei ein Oberteil (18; 28) der Nabe (10; 20) ein Greifelement (19; 29) bildet, das mit zwei gegenüberliegenden Seitenflächen (31, 32; 41, 42) ausgestattet ist, wobei mindestens eine der Seitenflächen (31, 32; 41, 42) ein oberes Rückhalteelement (33; 43) aufweist, wobei die Nabe (10; 20) eine axiale Richtung aufweist, die der Drehachse des Antriebselements (16; 26) entspricht, wobei die Querdicke des oberen Rückhalteelements (33; 43) geringer ist als ein Viertel der axialen Höhe der Seitenflächen (31, 32; 41, 42) des Greifelements (19; 29), **dadurch gekennzeichnet, dass** sich die Seitenflächen (31, 32; 41, 42) des Greifelements (19; 29) axial unter der halben Höhe der Nabe (10; 20) erstrecken, und dadurch, dass die Querdicke des Greifelements (19; 29) geringer ist als ein Viertel der axialen Höhe der Seitenflächen (31, 32; 41, 42) des Greifelements (19; 29).

2. Abnehmbares Drehwerkzeug (6; 7) nach Anspruch 1, **dadurch gekennzeichnet, dass** die beiden Seitenflächen (31, 32; 41, 42) jeweils eines der oberen Rückhalteelemente (33; 43) aufweisen, wobei die Querdicke der oberen Rückhalteelemente (33; 43) geringer ist als ein Viertel der axialen Höhe der Seitenflächen (31, 32; 41, 42).

3. Abnehmbares Drehwerkzeug (6; 7) nach einem der Ansprüche 1 oder 2, **dadurch gekennzeichnet, dass** mindestens eine der Seitenflächen (31, 32; 41, 42) seitliche Rückhalteelemente (34, 35; 44, 45) aufweist, wobei die Querdicke der seitlichen Rückhalteelemente (34, 35; 44, 45) geringer ist als ein Viertel der axialen Höhe der Seitenflächen (31, 32; 41, 42).

4. Abnehmbares Drehwerkzeug (6; 7) nach einem der Ansprüche 1 bis 3, **dadurch gekennzeichnet, dass** das Greifelement (19; 29) eine Scheibenform aufweist.

5. Abnehmbares Drehwerkzeug (6; 7) nach einem der Ansprüche 1 bis 4, **dadurch gekennzeichnet, dass** mindestens eine der Seitenflächen (31, 32; 41, 42) eine Markierung (30; 40) aufweist.

6. Abnehmbares Drehwerkzeug (6; 7) nach Anspruch 5, **dadurch gekennzeichnet, dass** die Markierung (30; 40) reliefartig ist.

7. Abnehmbares Drehwerkzeug (6; 7) nach einem der Ansprüche 1 bis 6, **dadurch gekennzeichnet, dass** es mindestens ein Arbeitselement (11; 21) umfasst.

8. Abnehmbares Drehwerkzeug (6; 7) nach Anspruch 7, **dadurch gekennzeichnet, dass** das Arbeitselement (11; 21) in einem Unterteil (12; 22) der Nabe (10; 20) befestigt ist.

9. Abnehmbares Drehwerkzeug (6; 7) nach einem der Ansprüche 7 oder 8, **dadurch gekennzeichnet, dass** die Nabe (10; 20) um das Arbeitselement (11; 21) herumgeformt ist.

10. Abnehmbares Drehwerkzeug (6; 7) nach einem der Ansprüche 7 bis 9, **dadurch gekennzeichnet, dass** das Arbeitselement (11; 21) eine Klinge (13; 23) bildet.

11. Elektrohaushaltsgerät für kulinarische Zubereitungen, umfassend ein Gehäuse (1), in dem ein Elektromotor (2) und ein Behälter (3) untergebracht sind, wobei der Elektromotor (2) mit einer Antriebsachse (5) verbunden ist, die vorgesehen ist, um ein abnehmbares Drehwerkzeug (6, 7) aufzunehmen, **dadurch gekennzeichnet, dass** das abnehmbare Drehwerkzeug (6, 7) einem der Ansprüche 1 bis 10 entspricht.

12. Elektrohaushaltsgerät für kulinarische Zubereitungen nach Anspruch 11, **dadurch gekennzeichnet, dass** es zwei abnehmbare Drehwerkzeuge (6, 7) umfasst, und dadurch, dass das Gehäuse (1) eine Ausnehmung umfasst, die ein Schubfach (8) aufnimmt, das vorgesehen ist, um eines der abnehmbaren Drehwerkzeuge (6, 7) zu verstauen.
